# EUROPEAN PATENT APPLICATION

(11) **EP 4 575 023 A1**
(43) Date of publication of application: **25.06.2025**
(21) Application number: 23218415.0
(22) Date of filing: 20.12.2023
(51) Int. Cl.: C22B 3/42, C22B 7/00, C22B 3/00, C22B 34/32, C22C 35/00, C23G 1/36, C01G 53/00, C01G 53/10

(54) **METHOD FOR RECOVERING METALS FROM PICKLING ACID RESIDUE**

(71) Applicant: Fortum Battery Recycling Oy, 29200 Harjavalta (FI)
(72) Inventor: EKMAN, Peik, 29200 Harjavalta (FI); LAPPALAINEN, Elina, 29200 Harjavalta (FI); HAAPALA, Katja, 29200 Harjavalta (FI); KAUPPINEN, Pasi, 29200 Harjavalta (FI); EKMAN, Kenneth, 29200 Harjavalta (FI)
(74) Representative: Laine IP Oy

(57) **Abstract**

According to an example aspect, there is provided a method for recovering metals from pickling acid residue, comprising steps of: 1) slurrying the pickling acid residue into water, adding lime and/or a nickel- and cobalt- containing ferrous hydroxide material to the pickling acid residue solution to produce a partly neutralized first process solution having a pH of 3.5-4.5 and comprising nickel sulfate; 2) filtrating the first process solution to produce a nickel sulfate filtrate solution and a filter cake comprising sulfate, iron, chromium and optionally calcium; 3) refining the nickel; 4) processing the filter cake; and 5) processing the sulfate-free filter cake in a hydrogen and/or hydrogen-nitrogen atmosphere to produce a reduced filter cake containing reduced iron, chromium and optionally calcium carbonate..

## Description

### FIELD

The present invention relates to a method for recovering metals and other components from pickling acid residue (PAR).

### BACKGROUND

Pickling is a process in a stainless steel production that refers to treating steel with a mixture of acids to remove metal oxides and chrome-depleted layers from the steel. For instance, stainless steel is usually pickled with a mixture of nitric-hydrochloric-hydrofluoric acid or a combination of sulfuric acid-hydrofluoric acid. This results in an acidic solution containing various metals (such as nickel, chromium and iron). When the amounts of dissolved metals are too high, the pickling acids loses their effectiveness.

The primary acid used for pickling is hydrochloric acid, but a combination of various acids such as hydrofluoric, nitric, hydrochloric and sulfuric acid has also been a common choice. In automatic steel mills, hydrochloric acid is used as it pickles much faster while minimizing metal loss. Carbon steels with less than 6 wt-% alloy content are generally pickled in hydrochloric or sulfuric acids, while higher alloy content steels require a two-step pickling process using acids such as nitric, phosphoric or hydrofluoric acid. For rust and acid resistant steels, a pickling bath of nitric and hydrochloric acid is used.

Several different technologies have been developed to recycle the pickling acids and to recover the dissolved metals for re-use. Patent GB2036573 discloses the process of distillation of volatile acids in the presence of sulfuric acid and the recovery of the volatile acids by means of condensation. In a similar way, international patent application WO95/04844 discloses a process where volatile acids containing metal salt impurities, such as metal pickling solutions, are regenerated by a process in which the acid is subjected to sulfuric acid distillation. The resulting volatile acid vapor is condensed and recycled to the pickle tank, while the residual acid mixture is treated in an acid absorption unit, preferably of the acid retardation type. Acid absorbed in the acid absorption unit is periodically eluted with water and recycled, while metal impurities, in the form of sulfates are rejected, typically neutralized and discarded.

International patent application WO2010/051992 discloses a process for complete recovery of metals and acids from solutions and sludge coming from stainless steel works. Volatile acids are recovered though distillation in the presence of sulfuric acid, while the metals are separately recovered in the form of hydroxides or salts. The metals are recovered by neutralization and precipitation with sodium hydroxide.

Current recovery efforts include ion exchange methods, where metal ions are absorbed by an anionic bed, thus allowing the acids to be recycled back into the process. The metals can then be released with sedimentation and microfiltration of the bed, then regenerating the bed with water.

At Outokumpu steel mill in Tornio, Finland, a method for recycling of nitric and hydrofluoric acid uses evaporation, where sulfuric acid is first mixed into the pickling liquor, which in turn is then evaporated under vacuum at 80 °C. The nitric and hydrofluoric acids evaporate and can be recycled, and the remaining material is a cake of metal sulfates and free sulfuric acid.

A common problem with metal recovery from pickling acid residues is filtration, as hydroxides tend to bind water and thus create a gel, making filtration difficult or impossible. Ferrous hydroxides are generally the most abundant hydroxides in pickling acid residues, and in European patent application publication No. EP0161050, a method using solvent extraction to selectively remove Fe³⁺ is described. This method, while effective in removing iron from the pickling waste, still leaves other metal ions in the solution, which is now very difficult to treat due to residual liquid from the solvent extraction.

Typically, the solution is treated with lime to neutralize the acids and the material is then landfilled. Alkali neutralization is commonly done with limestone, either as calcium carbonate, calcium oxide or calcium hydroxide. Alternatively, sodium hydroxide and potassium hydroxide can be used and are faster acting, requiring only about 5-10 minutes to fully neutralize any pickling waste in contrast to about 30 minutes when neutralized with limestone. While NaOH and KOH are more expensive chemicals, less is required, so both time and material is saved. However, limestone neutralization gives better sedimentation and dewatering properties of the formed hydroxides, reducing the chance of metal seepage into the environment. The divalent charge of calcium is the primary reason for this, as the ionic strength of the bond becomes more powerful.

According to a European Commission briefing (December 2020), replacing coal in steel production with hydrogen generated by renewable energy could reduce 9% of anthropogenic CO₂ emissions worldwide. Approximately 50 kg of hydrogen is required to produce one ton of steel. Several companies, both start-ups and established players, such as GreenIron, Blastr Green Steel and SSAB are currently in the piloting and scale-up phases of steel production using hydrogen. Here, the key lies in producing green hydrogen, using renewable power for water electrolysis.

To recover both the acids and the metals would be an important step towards a more economical and environmentally friendly pickling process. The residue contains valuable metals in significant concentrations, and could potentially be processed into metal products or used as raw material for other processes.

An object of the present invention is this to mitigate at least some of the above-mentioned problems. An object of the present invention is to provide a method for recovering all metals and other valuable components from pickling acid residue, preferably without producing any waste.

### SUMMARY

According to a first aspect of the present disclosure, there is provided a method for recovering metals from pickling acid residue, comprising steps of:
1) slurrying the pickling acid residue into water, adding lime and/or a nickel- and cobalt- containing ferrous hydroxide material to the pickling acid residue solution to produce a partly neutralized first process solution having a pH of 3.5-4.5 and comprising nickel sulfate;
2) filtrating the first process solution to produce a nickel sulfate filtrate solution and a filter cake comprising sulfate, iron, chromium and optionally calcium;
3) refining the nickel by
   a) adding neutralizing agent, to the nickel sulfate filtrate solution to produce a second process solution, and filtrating the second process solution to produce a mixed hydroxide precipitate comprising nickel and a third process solution, or
   b) passing the nickel sulfate filtrate solution through a column containing an ion exchange resin bed and eluting the bed to produce a high purity nickel sulfate solution comprising at least 95 wt-% of nickel sulfate suitable to be used in production of battery chemicals;
4) processing the filter cake by
   a) slurrying the filter cake from step 2) into water, adding a metal carbonate-containing solution to dissolve the sulfate from the filter cake and to produce a fourth process solution, filtering the fourth process solution to produce a sulfate-free filter cake having a sulfur content of less than 1 wt-% and a sulfate filtrate solution, and crystallizing the sulfate filtrate solution to produce a mixed metal sulfate product, or
   b) slurrying the filter cake from step 2) into water, adding a water-soluble bicarbonate-forming metal hydroxide and carbon dioxide to produce a fifth process solution, filtering the fifth process solution to produce a sulfate-free filter cake having a sulfur content of less than 1 wt-% and a sulfate solution, and crystallizing the sulfate solution to produce metal sulfate crystals; and
5) processing the sulfate-free filter cake in a hydrogen and/or hydrogen-nitrogen atmosphere to produce a reduced filter cake containing reduced iron, chromium and optionally calcium carbonate.

Significant benefits are gained with aid of the present method. The method enables recovering metals and other valuable components present in PAR. The method enables recovering and valorizing nickel as either mixed hydroxide precipitate (a common raw material in nickel refining) or as battery grade nickel sulfate. In addition, the method enables recovering sulfates and chromium. The method enables forming products, which can be re-circulated in the said method or used in other processes. For example, the third process solution produced in step 3a) can be re-circulated back to step 1). Furthermore, a reduced sulfate free iron-chromium filter cake produced in step 5) can be returned to steel production as such or further refined to metals. Therefore, by using this method, essentially no waste material is produced and all components are recovered and valorized. In addition, the need for new acids is reduced by 30 to 50 wt-% depending on the acid used as the pickling acid. Thus, the method provides a more economical and environmentally friendly way to recover metals from complex iron containing metal industrial side streams.

One or more embodiments may comprise one or more features from the following itemized list:
- pH of the partly neutralized first process solution is preferably 3.9-4.2 in step 1)
- pH of the second process solution is 7.8-8.5, preferably 8-8.2 in step 3a)
- a temperature of the second process solution is 40-100 °C, preferably 50-60 °C, in step 3a)
- the third process solution in step 3a) is re-circulated back to step 1)
- in step 3b), chelating ion exchange can be used to selectively recover nickel
- a rate of passing the nickel sulfate filtrate solution through the column is 1-20 BVs, preferably 5-10 BVs, in step 3b)
- in step 3b), the ion exchange resin bed is eluted using 1-4, preferably 2-3 BVs of a 20 wt-% sulfuric acid solution to produce the high purity nickel sulfate solution
- after step 3b), crystallizing the high purity nickel sulfate solution to solid nickel sulfate hexahydrate
- the carbonate-containing solution is ammonium, sodium or lithium carbonate in step 4a)
- the filter cake is slurried into water at a 10-50 wt-%, preferably 20-35 wt-%, solid-to-liquid ratio in step 4a)
- the carbonate-containing solution is added at a temperature of 10-50 °C, preferably 15-25 °C, in step 4a)
- the metal hydroxide is magnesium hydroxide in step 4b)
- the carbon dioxide is added until pH is 6-7, preferably 6.2-6.6, in step 4b)
- the neutralizing agent is magnesium oxide in step 3a)
- the metal sulfate crystals are magnesium sulfate heptahydrate crystals in step 4b)
- the sulfate-free filter cake is processed in a rotary oven having a temperature of 400-600 °C and hydrogen content 5-80 %, preferably 5 %, in step 5)
- a residence time of the sulfate-free filter cake is 45-120 minutes, preferably 60 minutes, in the rotary oven in step 5)
- the method further comprises returning the reduced filter cake produced in step 5) to stainless steel production
- the method further comprises processing the reduced filter cake produced in step 5) by at least one separation step for example, electrostatic separation, magnetic separation and/or air classifying

### BRIEF DESCRIPTION OF THE DRAWINGS

FIGURE 1 illustrates a schematic block scheme of the process in accordance with at least some embodiments;
FIGURE 2 illustrates a comparative metal composition (C/C0) of samples taken during IEX experiment; and
FIGURE 3 illustrates an XRD diffractogram of a sulfate-free filter cake.

### EMBODIMENTS

In the present context, the term "pickling acid residue" refers to a pickling acid waste formed during a pickling process. Typically, the pickling acid residue (PAR) contains iron, nickel and chromium in the form of sulfates, and sulfuric acid. The iron content can be in the range of 10-15 wt-%, while the nickel and chromium content can be in the range of 2-5 wt-%. Sulfate content can be up to 60 wt-% of the total weight, out of which half can be expected to be free sulfuric acid.

In the present context, the term "high purity nickel sulfate solution" refers to nickel sulfate solution comprising at least 95 wt-%, preferably at least 99 wt-%, of nickel sulfate.

In the present context, the term "sulfate-free filter cake" refers to a filter cake having sulfur content less than 1 wt-%.

In the present context, the term "bed volume" refers to a volume of a resin bed when packed into a column.

It was found that by utilizing hydrogen reduction of a gypsum-containing iron-chromium filter cake from the pickling acid residue (PAR) neutralization, iron and chromium can be separated into grades suitable for return to stainless steel production, and calcium can be returned to neutralization of PAR as calcium oxide.

In the present method, the sulfuric acid containing pickling acid residue is treated in a stepwise process to recover desired components. According to the present embodiments, sulfates and essentially all metals, i.e. nickel, iron and chromium, in the pickling acid residue can be recovered and recycled for industrial use. Similarly, calcium hydroxide used in the method can be recycled to the initial neutralization stage.

The present method for recovering metals from pickling acid residue comprises steps of:
1) slurrying the pickling acid residue into water, adding lime and/or a nickel- and cobalt-containing ferrous hydroxide material to the pickling acid residue solution to produce a partly neutralized first process solution having a pH of 3.5-4.5 and comprising nickel sulfate;
2) filtrating the first process solution to produce a nickel sulfate filtrate solution and a filter cake comprising sulfate, iron, chromium and optionally calcium;
3) refining the nickel by
   a) adding a neutralizing agent to the nickel sulfate filtrate solution to produce a second process solution, and filtrating the second process solution to produce a mixed hydroxide precipitate comprising nickel and a third process solution, or
   b) passing the nickel sulfate filtrate solution through a column containing an ion exchange resin bed and eluting the bed to produce a high purity nickel sulfate solution comprising at least 95 wt-% of nickel sulfate suitable to be used in production of battery chemicals;
4) processing the filter cake by
   a) slurrying the filter cake from step 2) into water, adding a metal carbonate-containing solution to dissolve the sulfate from the filter cake and to produce a fourth process solution, filtering the fourth process solution to produce a sulfate-free filter cake having a sulfur content of less than 1 wt-% and a sulfate filtrate solution, and crystallizing the sulfate filtrate solution to produce a mixed metal sulfate product, or
   b) slurrying the filter cake from step 2) into water, adding a water-soluble bicarbonate-forming metal hydroxide and carbon dioxide to produce a fifth process solution, filtering the fifth process solution to produce a sulfate-free filter cake having a sulfur content of less than 1 wt-% and a sulfate solution, and crystallizing the sulfate solution to produce metal sulfate crystals; and
5) processing the sulfate-free filter cake in a hydrogen and/or hydrogen-nitrogen atmosphere to produce a reduced filter cake containing reduced iron, chromium and optionally calcium carbonate.

The method enables recovering metals and other valuable components present in PAR. The method enables recovering and valorizing nickel as either mixed hydroxide precipitate (a common raw material in nickel refining) or as battery grade nickel sulfate. In addition, the method enables recovering sulfates and chromium. The method enables forming products, which can be re-circulated in the said method or used in other processes. For example, the third process solution produced in step 3a) can be re-circulated back to step 1). Furthermore, a reduced sulfate free iron-chromium filter cake produced in step 5) can be returned to steel production as such or further refined to metals. Therefore, by using this method, essentially no waste material is produced and all components are recovered and valorized. In addition, the need for new acids is reduced by 30 to 50 wt-% depending on the acid used as the pickling acid. Thus, the method provides a more economical and environmentally friendly way to recover metals from complex iron containing metal industrial side streams.

In step 1), preferably more than 90 wt-% of all sulfates is precipitated as gypsum and nickel remains in the solution as nickel sulfate. Nickel- and cobalt containing ferrous hydroxide materials, which can be used to neutralize PAR, are common byproducts of metallurgical processing. Lime, i.e. calcium hydroxide, can be fully or partially replaced by these alternative hydroxide filter cakes.

In step 1), pH of the partly neutralized first process solution is preferably 3.9-4.2. The use of nickel- and cobalt-containing ferrous hydroxide material enables reducing the use of lime and gypsum formation in the process. In addition, the use enables valuable metals to be brought into the process, which metals can be recovered.

In step 2), i.e. after separating the nickel sulfate solution from solid particles by filtration, the remaining filter cake can be a mixture of sulfate, iron and chromium hydroxides and gypsum.

After step 2), the nickel sulfate filtrate solution is further processed using either of two routes, i.e. by step 3a) or 3b). In the step 3a) or 3b), nickel is selectively be separated from the other components of the filtrate solution.

In step 3a), pH of the second process solution can be 7.8-8.5, preferably 8-8.2. Temperature of the second process solution can be 40-100 °C, preferably 50-60 °C. The third process solution produced in step 3a) can be re-circulated back to step 1).

The neutralizing agent is preferably magnesium oxide in step 3a).

In step 3b), chelating ion exchange can be used to selectively recover nickel. The column contains an ion exchange resin bed. An ion exchange resin bed with bis-picolyl amine functionality can be used. A rate of passing the nickel sulfate filtrate solution through the column can be 1-20 BVs (bed volumes), preferably 5-10 BVs. The ion exchange resin bed can be eluted using 1-4, preferably 2-3 BVs, of a 20 wt-% sulfuric acid solution to produce the high purity nickel sulfate solution. The high purity nickel sulfate solution can be crystallized to solid nickel sulfate hexahydrate.

The filter cake from step 2) can be further processed using two routes, i.e. by step 4a) or 4b).

In step 4a), the sulfate from gypsum can be dissolved using a stochiometric amount of metal carbonate-containing solution. The metal carbonate-containing solution can be ammonium, sodium or lithium carbonate. The filter cake can be slurried into water at a 10-50 wt-%, preferably 20-35 wt-%, solid-to-liquid (S:L) ratio. The metal carbonate-containing solution can be added at a temperature of 10-50 °C, preferably 15-25 °C, in this step. The reaction can be continued for 30-180 minutes, preferably 60-90 minutes, before filtering. The resulting sulfate-free filter cake can be washed and dried, while the sulfate filtrate solution is crystallized to produce a sulfate product, for example ammonium-, sodium or lithium sulfate, depending on which carbonate chemical has been used. The sulfate filtrate solution can be crystallized for example, by evaporation.

In step 4b), the filter cake can be slurried into water at a 5-40 wt-%, solid-to-liquid (S:L) ratio, preferably 20-30 wt-%, and a water-soluble bicarbonate-forming metal hydroxide and carbon dioxide (CO₂) is added to the reactor. Preferably, the metal hydroxide is magnesium hydroxide. The carbon dioxide is preferably added until pH is 6-7, more preferably 6.2-6.6. This step dissolves sulfates from gypsum as a metal sulfate, producing calcium carbonate in the filter cake according to:

Mg(OH)₂ + CO₂ → MgHCO₃ + H₂O

MgHCO₃ + CaSO₄ → MgSO₄ + CaHCO₃

Calcium bicarbonate decomposes to calcium carbonate during drying. The drying can be performed at 100-150 °C, preferably at about 105 °C. The sulfate-free filter cake can be separated by filtration. Then, the sulfate solution can be crystallized to produce metal sulfate crystals, for example, magnesium sulfate heptahydrate crystals. The sulfate solution can be crystallized by evaporation. The magnesium sulfate heptahydrate crystals are produced when the metal hydroxide is magnesium hydroxide.

In step 5), the sulfate-free filter cake can be processed in a rotary oven having a temperature of 400-600 °C and hydrogen content 5-80 %, preferably about 5 %. The rotational speed of the oven can be adjusted so that the preferred residence time is achieved. A residence time of the sulfate-free filter cake in the rotary oven can be 45-120 minutes, preferably about 60 minutes. The purpose of this step 5) is to reduce the iron hydroxide present in the filter cake to either magnetite, metallic iron or a mixture of both to produce a reduced filter cake. The reduced filter cake comprises both reduced iron and chromium, and is essentially sulfur-free. Thus, the reduced filter cake produced in step 5) can be returned to stainless steel production. The reduced filter cake can optionally comprise calcium carbonate. The calcium carbonate present in the reduced filter cake can act as flux.

Optionally, the method can further comprise processing the reduced filter cake produced in step 5) by at least one separation step, for example electrostatic separation, magnetic separation and/or air classifying. This enables increasing the value of the components by increasing their purity.

The reduced filter cake can be processed by a series of separation steps. For example, the reduced filter cake can be processed first by air classifying and then by magnetic- and/or electrostatic separation. By using the magnetic properties of the reduced iron, different quality products can be produced: firstly, a low-chromium containing iron fraction, secondly a (ferro)chromium fraction and lastly a calcium hydroxide fraction. The calcium hydroxide fraction can be calcinated and slaked to be reused in the neutralization stage, i.e. step 1), in the process.

Optionally, the produced CO₂ from calcination can be circulated in the process. CO₂ can be circulated to step 4a).

### DETAILED DESCRIPTION OF THE DRAWINGS

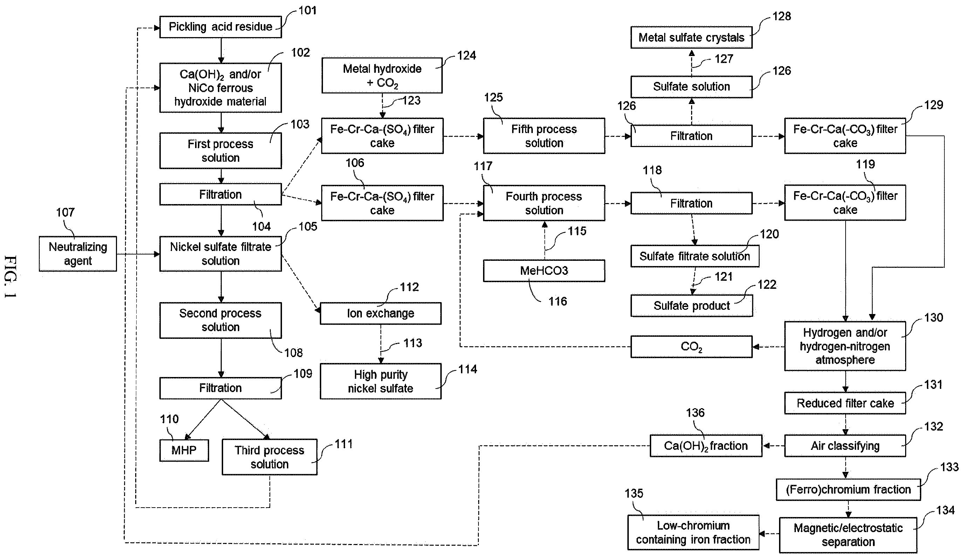

FIGURE 1 illustrates a schematic block scheme of the method. The method 100 comprises steps of:
1) slurrying the pickling acid residue 101 into water, adding 102 lime and/or a nickel- and cobalt-containing ferrous hydroxide material to the pickling acid residue solution and to produce a partly neutralized first process solution 103 having a pH of 3.5-4.5 and comprising nickel sulfate;
2) filtrating 104 the first process solution to produce a nickel sulfate filtrate solution 105 and a filter cake 106 comprising sulfate, iron, chromium and optionally calcium;
3) refining the nickel by
   a) adding 107 neutralizing agent, to the nickel sulfate filtrate solution to produce a second process solution 108, and filtrating 109 the second process solution to produce a mixed hydroxide precipitate 110 comprising nickel, and a third process solution 111, or
   b) passing the nickel sulfate filtrate solution through a column containing an ion exchange resin bed 112 and eluting 113 the bed to produce a high purity nickel sulfate solution 114 comprising at least 95 wt-% of nickel sulfate suitable to be used in production of battery chemicals;
4) processing the filter cake by
   a) slurrying the filter cake from step 2) into water, adding 115 a metal carbonate-containing solution 116 to dissolve the sulfate from the filter cake and to produce a fourth process solution 117, filtering 118 the fourth process solution to produce the sulfate-free filter cake 119 having a sulfur content of less than 1 wt-% and a sulfate filtrate solution 120, and crystallizing 121 the sulfate filtrate solution to produce a mixed metal sulfate product 122, or
   b) slurrying the filter cake from step 2) into water, adding 123 a water-soluble bicarbonate-forming metal hydroxide and carbon dioxide 124 to produce a fifth process solution 125, filtering 126 the fifth process solution to produce the sulfate-free filter cake 129 having a sulfur content of less than 1 wt-% and a sulfate solution 126, and crystallizing 127 the sulfate solution to produce metal sulfate crystals 128; and
5) processing the sulfate-free filter cake in a hydrogen and/or hydrogen-nitrogen atmosphere 130 to produce a reduced filter cake 131 containing reduced iron, chromium and optionally calcium carbonate.

The reduced filter cake 131 can be processed first by air classifying 132 and then by magnetic- and/or electrostatic separation 134. Different quality products can be produced: firstly, a low-chromium containing iron fraction 135, secondly a (ferro)chromium fraction 133 and lastly a calcium hydroxide fraction 136. The calcium hydroxide fraction 136 can be calcinated and slaked to be reused in the neutralization stage, i.e. step 1), in the process.

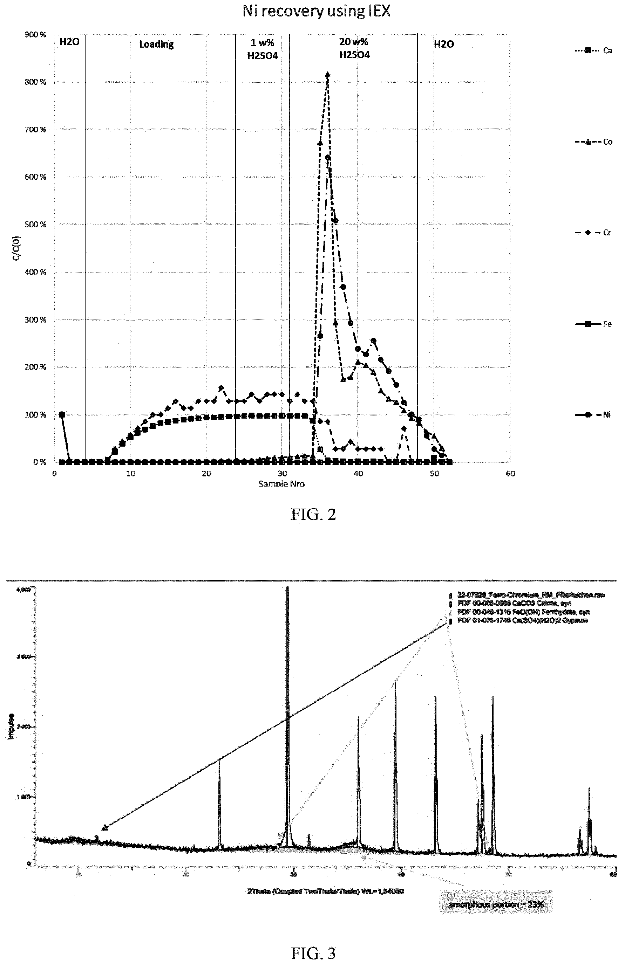

FIGURE 2 illustrates a comparative metal composition (C/C0) of samples of Example 2 taken during IEX experiment. The samples were collected at 50 ml intervals during washing and loading, and at 25 ml intervals during acid elution. Nickel (and cobalt) is selectively separated and recovered from the nickel sulfate solution.

FIGURE 3 illustrates an XRD diffractogram of a sulfate-free filter cake, showing that goethite has been reduced to magnetite and metallic iron. The analysis was performed on material processed with a double stochiometric amount.

### EXAMPLES

Next, the method is described with reference to the following examples.

### Example 1

10.04 g of pickling acid residue was slurried into 100 ml water and heated to 80 °C. 18 ml of 20 wt-% Ca(OH)₂-slurry was added and mixed for 30 minutes, after which pH was measured to 4.3. The mixture was filtered, the filter cake was washed and the filtrate collected. 11.37 g of the filter cake was collected. Both were analysed with ICP-OES and the results are presented in Table 1.

**Table 1. Metal composition of the filtrate and filter cake from PAR neutralization.**

| Element | Filtrate, ppm | Filter cake, ppm |
|---|---|---|
| Ca | 544.9 | 204100 |
| Co | 20 | 38.8 |
| Cr | 0.9 | 14370 |
| Fe | 1.3 | 94890 |
| Ni | 854.5 | 2310 |

The filtrate was heated to 80 °C and 0.1 g of MgO was added. Mixture was heated for 30 min, and the pH increased to 8.04. The mixture was filtered, washed and dried. A total of 0.19 g filter cake was collected. Both were analysed with ICP-OES and results are presented in Table 2.

**Table 2. Metal composition of the filtrate and filter cake from MHP precipitation.**

| Element | Filtrate, ppm | Filter cake, ppm |
|---|---|---|
| Ca | 460 | 1543 |
| Co | < 0.11 | 8098 |
| Cr | < 0.16 | 455 |
| Fe | < 0.50 | 964 |
| Ni | 1.3 | 343600 |

Based on the results, it can be concluded that nickel is completely separated from iron and chromium, and precipitated as a mixed hydroxide precipitate (MHP).

### Example 2

50 ml of Lewatit TP207 MDS was loaded into a drip column and washed with water. A nickel sulfate solution, which composition is shown in Table 3, was passed through the resin at an approximate rate of 1 BV/h. A total of 1200 ml nickel sulfate solution was pumped, followed by 150 ml of 1 wt-% sulfuric acid, followed by 410 ml of 20 wt-% sulfuric acid. Finally, the resin was washed with 440 ml of water. Samples were collected at 50 ml intervals during washing and loading, and at 25 ml intervals during acid elution. The metal composition of the collected samples was analysed with ICP-OES and plotted as C/C0 (sample concentration / feed concentration) as presented in FIGURE 2.

Based on these results, it can be concluded that nickel (and cobalt) is selectively separated and recovered from the nickel sulfate solution, as presented in FIGURE 2.

**Table 3. Metal composition of nickel sulfate solution used for IEX experiment.**

| Element | NiSO₄ solution, ppm |
|---|---|
| Ca | 465.5 |
| Co | 28.5 |
| Cr | 0.7 |
| Fe | <0.5 |
| Ni | 939.7 |

### Example 3

To determine the required reactants, a set of three separate experiments was conducted. In each experiment, 30 g of iron-chromium filter cake was slurried into 100 ml of water. 7.25 g of ammonium carbonate was calculated to be the stochiometric amount required to convert calcium sulfate to carbonate. In the first experiment, 7.25 g of ammonium carbonate was added. In the second experiment, 14.5 g of ammonium carbonate was added, and in the third experiment, 20 g of ammonium carbonate was added. Reaction was continued at room temperature for 6 hours, and then the solution was filtered. The resulting sulfate-free iron-chromium filter cakes were washed and analyzed with ICP-OES. The results are presented in Table 4.

**Table 4. Metal composition (as mg/kg) of the iron-chromium (FeCr) filter cake used in the trial and the resulting sulfate-free filter cakes.**

| Element | Ca | Cr | Co | Fe | Ni | S |
|---|---|---|---|---|---|---|
| FeCr | 136200 | 7943 | 32.2 | 63910 | 1239 | 117500 |
| 7.25g | 244000 | 14810 | 103.2 | 116000 | 3450 | 90350 |
| 14.5g | 280900 | 16580 | 75.1 | 128400 | 2618 | 8153 |
| 20g | 282100 | 16540 | 70.2 | 129600 | 2211 | 6912 |

Based on the results it can be concluded that a double stoichiometric amount of ammonium carbonate is required to produce a sulfur-free (<1 wt-% S) FeCr cake.

Based on this analysis, the main components are calcium carbonate, goethite and residual gypsum. Chromium hydroxide and non-crystalline goethite are located in the amorphous portion.

### Example 4

A series of hydrogen reduction experiments were performed on sulfate-free FeCr cake to determine optimal conditions for reduction of metals in the FeCr cake. Hydrogen concentration, temperature and time were varied. A rotary oven (Carbolite^{®}) was used in all trials.

All tests were performed by loading the sulfate-free FeCr cake into the oven and flowing forming gas through the oven.

XRD analysis was performed on all reduced FeCr cakes to determine the iron compound species. A summary of the findings is presented in Table 5.

All materials were confirmed to be magnetic regardless of temperature, residence time and forming gas concentration. Based on the results, it can be determined that 500 °C is a minimum to form metallic iron. No goethite is detected in any sample, implying that magnetite is formed already at 400 °C. At 700 °C, calcium carbonate decomposes and forms calcium oxide. Side reactions (CaS and Srebrodoskit) can also be seen at 700 °C.

**Table 5. Compilation of the reduction trial results and crystal phase structures based on XRD analysis.**

| Forming gas | | 80 V% N₂/20 V% H₂ | | | | | | 90 V% N₂/10 V% H₂ | 95 V% N₂/5 V% H₂ | | |
|---|---|---|---|---|---|---|---|---|---|---|---|
| Trial | Feed | 400°C, 1h | 500°C, 0.5h | 500°C, 1h | 500°C, 2h | 600°C, 1h | 700°C, 1h | 500°C, 1h | 500°C, 1h | 400°C, 1h | 500°C, 0.5h |
| XRD phase structures detected | CaCO3 | CaCO3 | CaCO3 | CaCO3 | CaCO3 | CaCO3 | CaO | CaCO3 | CaCO3 | CaCO3 | CaCO3 |
| | Goethite | No Fe | Fe | Fe | Fe | Fe | Fe | Fe | Fe | Fe | No Fe |
| | Gypsum | Magnetite | Magnetite | Magnetite | Magnetite | Magnetite | Magnetite | Magnetite | Magnetite | Magnetite | Magnetite |
| | | | | | | | CaS | | | | |
| | | | | | | | CaCO3 | | | | |
| | | | | | | | Srebrodoskit | | | | |

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

## Claims

1. Method for recovering metals from pickling acid residue, comprising steps of:
1) slurrying the pickling acid residue into water, adding lime and/or a nickel- and cobalt- containing ferrous hydroxide material to the pickling acid residue solution to produce a partly neutralized first process solution having a pH of 3.5-4.5 and comprising nickel sulfate;
2) filtrating the first process solution to produce a nickel sulfate filtrate solution and a filter cake comprising sulfate, iron, chromium and optionally calcium;
3) refining the nickel by
a) adding neutralizing agent to the nickel sulfate filtrate solution to produce a second process solution, and filtrating the second process solution to produce a mixed hydroxide precipitate comprising nickel and a third process solution, or
b) passing the nickel sulfate filtrate solution through a column containing an ion exchange resin bed and eluting the bed to produce a high purity nickel sulfate solution comprising at least 95 wt-% of nickel sulfate suitable to be used in production of battery chemicals;
4) processing the filter cake by
a) slurrying the filter cake from step 2) into water, adding a metal carbonate-containing solution to dissolve the sulfate from the filter cake and to produce a fourth process solution, filtering the fourth process solution to produce a sulfate-free filter cake having a sulfur content of less than 1 wt-% and a sulfate filtrate solution, and crystallizing the sulfate filtrate solution to produce a mixed metal sulfate product, or
b) slurrying the filter cake from step 2) into water, adding a water-soluble bicarbonate-forming metal hydroxide and carbon dioxide to produce a fifth process solution, filtering the fifth process solution to produce a sulfate-free filter cake having a sulfur content of less than 1 wt-% and a sulfate solution, and crystallizing the sulfate solution to produce metal sulfate crystals; and
5) processing the sulfate-free filter cake in a hydrogen and/or hydrogen-nitrogen atmosphere to produce a reduced filter cake containing reduced iron, chromium and optionally calcium carbonate.

2. The method of claim 1, wherein pH of the partly neutralized first process solution is 3.9-4.2 in step 1).

3. The method of any one of the preceding claims, wherein pH of the second process solution is 7.8-8.5, preferably 8-8.2 in step 3a).

4. The method of any one of the preceding claims, wherein a temperature of the second process solution is 40-100 °C, preferably 50-60 °C, in step 3a).

5. The method of any one of the preceding claims, wherein the third process solution in step 3a) is re-circulated back to step 1).

6. The method of claim 1 or 2, wherein a rate of passing the nickel sulfate filtrate solution through the column is 1-20 BVs, preferably 5-10 BVs, in step 3b).

7. The method of claim 1, 2 or 6, wherein in step 3b) the ion exchange resin bed is eluted using 1-4, preferably 2-3 BVs of a 20 wt-% sulfuric acid solution to produce the high purity nickel sulfate solution.

8. The method of claim 1, 2, 6 or 7, further comprising, after step 3b), crystallizing the high purity nickel sulfate solution to solid nickel sulfate hexahydrate.

9. The method of any one of the preceding claims, wherein the carbonate-containing solution is ammonium, sodium or lithium carbonate in step 4a).

10. The method of any one of the preceding claims, wherein the filter cake is slurried into water at a 10-50 wt-%, preferably 20-35 wt-%, solid-to-liquid ratio in step 4a).

11. The method of any one of the preceding claims, wherein the carbonate-containing solution is added at a temperature of 10-50 °C, preferably 15-25 °C, in step 4a).

12. The method of any one of the claims 1 to 8, wherein the metal hydroxide is magnesium hydroxide in step 4b).

13. The method of any one of the claims 1 to 8 or 12, wherein the carbon dioxide is added until pH is 6-7, preferably 6.2-6.6, in step 4b).

14. The method of any one of the claims 1 to 8 or 12 to 13, wherein the neutralizing agent is magnesium oxide in step 3a) and/or the metal sulfate crystals are magnesium sulfate heptahydrate crystals in step 4b).

15. The method of any one of the preceding claims, wherein the sulfate-free filter cake is processed in a rotary oven having a temperature of 400-600 °C and hydrogen content 5-80 %, preferably 5 %, in step 5).

16. The method of claim 15, wherein a residence time of the sulfate-free filter cake is 45-120 minutes, preferably 60 minutes, in the rotary oven in step 5).

17. The method of any one of the preceding claims, further comprising returning the reduced filter cake produced in step 5) to stainless steel production.

18. The method of any one of the claims 1 to 16, further comprising processing the reduced filter cake produced in step 5) by at least one separation step for example, electrostatic separation, magnetic separation and/or air classifying.
